(19) Europäisches Patentamt
European Patent Office
Office européen des brevets

(11) **EP 3 333 725 A1**

(12) **EUROPEAN PATENT APPLICATION**

(43) Date of publication:
**13.06.2018 Bulletin 2018/24**

(51) Int Cl.:
***G06F 17/30*** *(2006.01)*     ***G01C 21/32*** *(2006.01)*
***G09B 29/10*** *(2006.01)*

(21) Application number: **16462009.8**

(22) Date of filing: **07.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **UTB Envirotec Zrt.**
**1139 Budapest (HU)**

(72) Inventor: **Bhasin, Charandeep Singh**
**H-1025 Budapest (HU)**

(74) Representative: **Harangozo, Gabor**
**Danubia**
**Patent & Law Office LLC**
**P.O. Box 198**
**1368 Budapest (HU)**

(54) **METHOD AND COMPUTER PROGRAM PRODUCT FOR THE PRODUCTION OF A LOCATION IDENTIFIER**

(57) A computer-implemented method of producing a location identifier, the method comprising the following steps carried out in a computer: receiving a 2D geographical position of a location (P); identifying a grid point (G) nearest to said location, wherein the grid points are uniformly distributed along a plurality of predefined latitudes, said predefined latitudes being equally spaced from each other in the longitudinal direction by a predefined distance; assigning a unique code represented by a plurality of alphanumerical characters to said grid point (G); and making the alphanumerical unique code available as a location identifier of said location (P).

FIG. 1

EP 3 333 725 A1

**Description**

FIELD OF THE INVENTION

The present invention relates to a computer implemented method and a computer program product for producing a location identifier, in particular to the production of a unique identifier of a geographical location in a language-independent manner.

BACKGROUND ART

Recently, satellite based positioning systems have become widely used which are able to determine the location of a device incorporating a geographical positioning system, like GPS unit, with great accuracy. The use of geometric numerical coordinates to identify geographic locations, such as latitude and longitude coordinates or grid references, is well know, and satellite based positioning systems usually identify locations using such numerical coordinates, e.g. GPS coordinates.

One of the practical problems with using numerical coordinates to identify locations is that the coordinate representation of the location's position is not user-friendly in practice. In some cases locations are identified using other means such as post codes or street names, which can be useful only in urban areas where a high density of suitable codes, names and numbers are available. With the post codes or street names, the following problems arise:

- about 75% of the world's population has inadequate addressing;

- more than 3 billion people have no formal/reachable address;

- map applications are usually not detailed enough while using an excessive amount of storage space and data;

- landmark navigation is inaccurate;

- for transportation service providers, the last mile of transportation has a relatively high transportation cost (last mile delivery problems);

The document US 2009/0077100 discloses a universal geographic database and a method of creating, maintaining and using the same. The Universal Geographic Database includes a real-time, automated registry/clearinghouse for the publication and retrieval of real-world locations and location-related information for businesses and other entities. By this registry, entities may publish their location and location-related information in a single place, and information services and their users can refer to this single place, via telecommunications devices, to obtain static, real-time location and location-based information about the registered locations. Each UGD record is keyed by a proprietary location address (PLA) based on the World Geographic Referencing System (WGRS). The PLAs may be used as key reference and addressing terms, e.g., imbedded in digital documents, websites, GPS devices, or other information services to provide links to maps, directions, and information in the registry related to such locations. PLAs may also provide a concise, user-friendly notation for location naming and designating real-world locations. One of the drawbacks of this solution is that the location data cannot be converted back to a real location, therefore the database is unsuitable for navigation use.

The document WO 2014/170646 A1 discloses a method of producing a location identifier. The method comprises the steps of obtaining the geographical coordinates of a location; converting the geographical coordinates into a single unique value n; converting the single unique value n into a unique group of a plurality of values; converting the plurality of values into an equal plurality of respective words; and providing the plurality of words as a location identifier. One of the drawbacks of this solution is that the representation of the location identifiers is language-dependent and therefore the off-line computer implementation of the method requires a rather large memory space for storing the word database. A further disadvantage of this solution is that because of the approximately spherical shape of the earth, the size and shape of the cells vary, with the cells being approximately constant in width in the North-South direction, and varying in width in the East-West direction, and the East-West dimension of the cells generally being smaller at locations further from the Equator, which results in an uneven resolution of the accessible positions within the global grid of cells.

It is an object to the present invention to eliminate at least part of the drawbacks of the prior art solutions.

It is a further object of the present invention to provide a method of producing a unique location identifier for a geographical location, wherein the unique location identifier is language-independent and therefore the computer implementation of the method has a substantially reduced storage space requirement even with off-line implementation.

It is yet another object of the present invention to provide a method of producing a unique location identifier for a geographical location, wherein the accessible positions have a substantially constant resolution over the entire surface of the Earth.

These and other objects are achieved, in a first aspect of the present invention, by providing a computer-implemented method of producing a location identifier, the method comprising the following steps carried out in a computer:

- a) receiving a 2D geographical position of a location;
- b) identifying a grid point nearest to said location, wherein the grid points are uniformly distributed along a plurality of predefined latitudes, said predefined latitudes being equally spaced from each other in the longitudinal direction by a predefined distance;
- c) assigning a unique code represented by a plurality of alphanumerical characters to said nearest grid point; and
- d) making the alphanumerical unique code available as a location identifier of said location.

Preferably, the above step c) comprises counting the grid points from a predefined initial grid point, along a predefined path, to the grid point nearest to said location, thereby obtaining a count value, and representing said count value in a numeral system of a predefined base.

The 2D geographical coordinates may be GPS coordinates.

It is preferred that the longitudinal distance between two adjacent latitudes is at most about 14 meters, the lateral distance between two adjacent grid points is at most about 14 meters, and the location identifier is a code represented in the numeral system of 36.

In a preferred embodiment of the method the entire surface of the Earth is covered by said grid points, and the location identifiers are represented by 8 alphanumerical characters.

In another preferred embodiment of the method, a plurality of predefined rectangular or substantially rectangular areas are covered by said grid points, and the location identifiers are represented by 8 alphanumerical characters, the first 3 characters being a specific area code and the remaining 5 characters being alphanumerical characters generated on the basis of the position of the location within said area, said specific area code being selected from the group of IATA codes, postal index numbers, country/city phone codes or the like.

The above and other objects are further achieved by providing a computer program product stored on a computer-readable medium and comprising instructions which, when executed on a computer, cause the computer to carry out the method according to the present invention.

The method according to the first aspect of the present invention, converts the latitude and longitude coordinates into a short unique alphanumeric code that is easy to remember and communicate, e.g. to share via SMS or email. When implemented in a computer device, the method has a reduced memory/processor footprint and also capable of working offline, which is particularly beneficial in navigation/transportation applications.

The method according to the second aspect of the present invention, converts a short unique alphanumeric code of a location into 2D geographical positions, like GPS latitude and longitude coordinates. When implemented in a computer device, this reverse conversion method also has a reduced memory/processor footprint and also capable of working offline. The second method is particularly beneficial for finding a location with a predefined, relatively small distance error.

It is noted that within the context of the present invention, the terms "computer" and "computer device" can be referred to as any kind of processor-based electronic device equipped with a graphical user interface, including personal computer, notebook computer, laptop, tablet, Personal Digital Assistant (PDA), smart phone, etc.

BRIEF DESCRIPTION OF THE DRAWINGS

Fig. 1 shows the geometries of a preferred pattern of grid points uniformly distributed over the surface of the Earth in accordance with the present invention.

Fig. 2 is flow diagram showing the major steps of the method according to the first aspect of the present invention.

DETAILED DESCRIPTION OF THE INVENTION

First, a method of converting 2D geographical positions, like GPS coordinates, into alphanumerical sequences will be described. It is required that the geographic positions have a resolution of at least 10 meters anywhere on the Earth. Obviously, the higher the resolution of the positions is, the longer codes must be used.

For example, for the aforementioned resolution of about 10 meters, the use of codes of 8 alphanumerical characters represented in the numeral system of 36 seems to be enough, as it will be explained in detail later.

Assuming 36 alphanumeric symbols for each character, the 8-character alphanumeric strings can support up to Cs = $36^8$ = 2.821.109.907.456 different locations.

As the angular resolution would produce a varying resolution towards the poles of the Earth, to obtain a substantially constant spatial resolution on the Earth's surface in terms of the accessible positions through the methods of the present invention, rather than in geo code terms, the Earth's surface should be mapped onto a grid, the grid point density of which is substantially constant. It is noted that the for any latitude y, the length L of the corresponding latitude circle can be calculated by the following formula:

$$L(y) = 2 * R * \pi * \cos(y)$$

where R is the Earth's radius.

This means that the 360-degree longitude resolution would produce finer and finer spatial resolution towards the poles since the length L decreases towards the poles.

To have a substantially uniform grid point density, one should represent each latitude by a number of points that is proportional to the length of that latitude. If the Equator is represented by k points, then any latitude y should be represented by k * cos(y) points so that the spatial resolution remains constant.

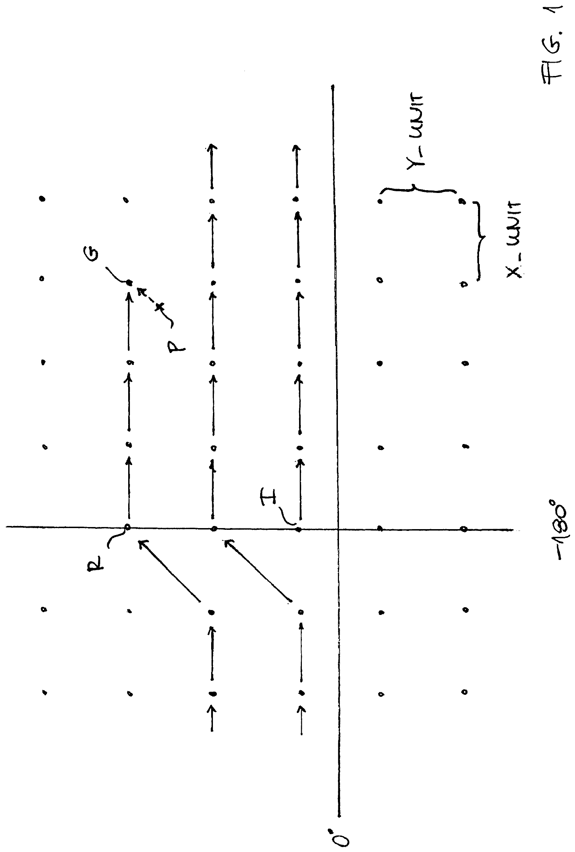

It is noted that within the meaning of the present invention the term "grid" is used to define a pattern of a plurality of points over the entire the surface of the Earth, wherein the points, also called "grid points", are equally spaced along a plurality of latitudes, which are also equally spaced in longitudinal direction. Consequently, the grid points define a pattern which substantially corresponds to a square grid in the proximity of the Equator, while showing a rather stochastic pattern in the proximity of the poles. At the same time, any geographical position within this kind of grid can be determined substantially with a constant resolution, unlike those solutions which use cell grids based on angular division. A preferred pattern of the grid points can be seen in Figure 1, which also shows some geometric parameters of the methods according to the present invention, which will be discussed later.

The grid points may be counted by a single variable, and the particular value of this count variable may form the basis for the code generation. For counting the grid points of the grid, a counting reference point for each latitude is required. The choice is arbitrary, as long as it is unique, but the point representing x= -180 degrees on all latitudes simplifies the calculations, and it is therefore chosen. Accordingly, mapping of the real longitude/latitude coordinates (x, y) into grid points may be defined by the following function:

$$F(x, y) = ((x + 180) * \cos(y), y)$$

The above mapping function produces a constant density for the grid points on flat surface bounded by a cosine envelope, like the Earth's surface. Since because of the above-mentioned required resolution the conversion error cannot exceed 10 meters, the "cells" defined by the four grid points closest to a particular location can be approximated with squares of size $10 \cdot \dfrac{2}{\sqrt{2}}$ which is about 14 meters.

Any arbitrarily obtained position of the Earth's surface should be assigned (rounded) to the nearest grid point to stay within the preset error range (e.g. 10 metres).

The grid point for an arbitrary longitude/latitude coordinate pair (x, y) may be identified, for example, by counting the grid points from a predefined initial grid point I along a predefined path, to the grid point G nearest to a location P, as shown in Figure 1. The predefined path is illustrated by arrows in Figure1. It is noted, however, that any other suitable procedure may be applied to identify said nearest grid point G.

In a particularly beneficial embodiment of the first method of the present invention, in which the entire surface of the Earth is covered by grid points, the initial grid point I may locate on the x = -180 longitude and at a distance of 7 meters from the Equator in the northern direction. In this embodiment, the grid points may be counted according to the following algorithm:

  i) count the grid points from the initial grid point to the counting reference point R of the latitude on which the grid point G resides;

  ii) if the grid point G is on the southern hemisphere, add the total number of grid points on the northern hemisphere to the count value of the southern hemisphere;

  iii) count the grid points along the latitude of the grid point G from the respective counting reference point R to the grid point G and add this number to the count value;

In other words, all grid points residing on the latitudes having a lower value than that of the current latitude are counted, and then all grid points residing on the current latitude and have a longitude value no greater than the current longitude are also counted. The precedence order for the latitudes may be arbitrary, but for easier computations it is preferred that the latitude running at 7 meters from the Equator is used as the first northern latitude, and on the northern hemisphere, the further latitudes follow at every 14 meters in the longitudinal direction towards the northern pole. At the same time, the southern latitude running at 7 meters from the Equator is used as the first southern latitude, and on the southern hemisphere, the further latitudes follow at every 14 meters in the longitudinal direction towards the southern pole.

In another preferred embodiment of the first method of the present invention, only a predefined area of the Earth's surface is covered by grid points, for example a rectangular or substantially rectangular area covering a big city. In this case the initial grid point may be defined as a corner point of the particular area, and the traversing path of the grid, points within the area may be defined to start from one corner point and to arrive at the diagonally opposite corner point of the rectangular or nearly rectangular. It is noted that any other shape for the areas may be conceivable, including circle, hexagon or the like, with the only constraint that the geometry of the shape can be defined in a rather compressed form.

The grid points along the predefined latitudes may also be counted with a closed formula instead of summing up the counts of the grid points for each of the previous latitudes and the current latitude. Since the length of each latitude is proportional to the cosine of the latitude expressed as an angle, and the cosine function produces a real number for integer latitude values (given in degree), rounding up and adding a constant to the rounded values_will fix this problem. Adding a predefined, small constant value to the rounded values in each row of the grid may be used to avoid any accidental overlapping of the indices of adjacent rows in the above integration formula due to the rounding operation.

When the entire surface of the Earth is covered by grid points, the following algorithm may be used for the grid point counting.

First, it is assumed that the radius ER of the Earth is ER = 6378 kilometers. The predefined resolution *res* is assumed to be res = 14 meters. Then the resolution of the longitude and latitude values, XRES and YRES, respectively, may be calculated as

$$YRES = ceil(2 * ER * \pi / res),$$

and

$$XRES = ceil(ER * \pi / (2 * res))$$

where *ceil* is a function mapping a real number to the smallest following integer. In the above definitions, the values of XRES and YRES specify the total number of grid points in the longitudinal and lateral directions, respectively. It is noted that YRES is defined for theoretical grid points residing along the Equator.

Now, the offset value for the latitude at Y, or the minimum possible value for latitude Y, referred to as F(Y), is to be found as follows.

Along the Equator, F(Y)=0.

On the northern hemisphere:

base = 0

$$i = Y * YRES / 90$$

whereas on the southern hemisphere:

$$base = (2 * XRES * YRES / \pi) + (10 * YRES) + 1$$

$$i = -Y * YRES / 90$$

In the above expressions, the parameter *base* is defined as the latitude of the initial grid point for the counting of the grid points, and i gives the serial number of the current grid point along the respective latitude. On the northern hemisphere, the counting may start with 0 (base=0), whereas on the southern hemisphere, the counting may start with an offset latitude value.

From the above expressions F(Y) can be calculated as

$$F(Y) = ceil(2 * XRES * YRES / \pi + sin(0.5 * \pi * (i + 1) / YRES) + 10 * (i + 1))$$

Using the above expressions, the value of the above mentioned count variable can be calculated according to the following steps:

1. The longitudinal offset, X_OFF, is determined for the position (x, y):

X_OFF = F(Y) (This is the coordinates of the point (-180, Y).)

2.

$$X\_UNIT = 360 / XRES$$

$$Y\_UNIT = 90 / YRES$$

where X_UNIT and Y_UNIT are values (given in degree) specifying the angular distance between two grid points in the lateral and longitudinal directions, respectively.

3. The number of grid points are counted along the current longitude up to the current position by the following formulae:

$$YCNT = Y / Y\_UNIT$$

$$YGRID = round(YCNT) * Y\_UNIT$$

4. The number of grid points are then counted along the current latitude from the longitude X= -180 up to the current position by the following formulae:

$$latshrink = cos(\pi * YGRID / 180)$$

where YGRID is the rounded value of Y, and the *perimeter* is the entire length of the latitude, at the degree of latitude belonging to YGRID

$$XCNT = (X + 180) * latshrink / X\_UNIT$$

$$X\_GRID = X\_OFF + round(XCNT)$$

5. The code of the location is generated by adding X_GRID and Y_GRID, and the resulting value may be represented, as a unique code, in a numeral system of 36 using an available set of 36 alphanumeric symbols. It is noted that although any other numeral system may be used to represent the codes of the locations, a significantly smaller base of the numeral system would result in much longer codes, while a significantly higher base of the numeral system would suffer from the necessary involvement of a number of rather unusual symbols, which could render the computer implementation of the method less user-friendly in practice.

The core idea behind the above algorithm is that XCNT and YCNT gives the number of grid points while moving along the directions of latitude and longitude, respectively, from a predefined starting point through a predefined path. Counting the grid points in the longitudinal direction starts from an initial grid point having a distance of 7 meters from the Equator, whereas counting in the lateral direction starts from the longitude X = -180. To this end, the longitudinal coordinate y of the given position is first rounded to the longitudinal coordinate of the nearest grid point, the longitudinal offset X_OFF is then determined for the latitude of the selected grid point, i.e. the position (-180, YGRID) is determined, the number of grid points are summed between the first latitude and the latitude of the grid point closest to the current position, and then the number of the grid points is counted from the point (-180, YGRID) up to the selected nearest grid point in the eastern direction (along the current latitude) and added to the previous value of the count variable. The count value thus obtained is represented by a string of alphanumerical characters, and made available for the user.

When only a particular rectangular or substantially rectangular area of the Earth's surface, like a big city and its vicinity is concerned, the above algorithm of grid point counting may be applied with the only difference that the initial grid point is defined to be one of the corners of said area and a much lower number of grid points are to be counted, which means that the count value may be represented by less characters, but identification of the specific area also needs some characters. In a particularly beneficial embodiment of the first method of the present invention, the a plurality of rectangular or substantially rectangular areas on the Earth's surface are defined, in which the grid point are distributed so that the resolution of the positions remain within the aforementioned error distance of 10 meters. To this end, an area may be identified by any kind of specific area code like a 3-character IATA (International Air Transport Association) code of the associated city, a postal index number, a country/city phone code, etc, and the geographical position of a location within the specific area may be represented only by 8 alphanumerical characters based on the numeral system of 36.

In a second aspect, the present invention relates to a method of identifying a geographic location on the basis of a unique location code produced by the first method according to the invention. In this second method a reverse conversion from an alphanumeric location code to a 2D geographic position is carried out. As the resulting position is the grid point position identified by the location code, the reverse conversion has an inherent inaccuracy in the determination of the position of the original location represented by its unique location code. This inaccuracy comes from the approximation operation carried out in the position-to-code conversion algorithm. This inaccuracy can be reduced by increasing the grid point resolution along with using longer alphanumerical codes.

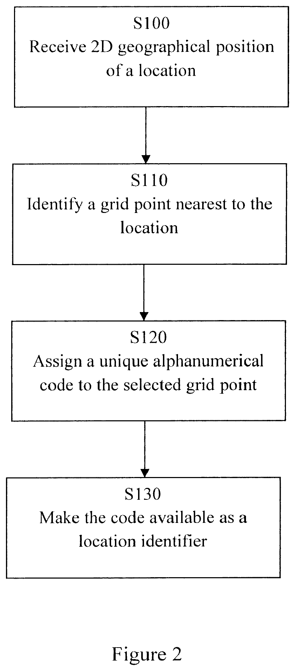

In Figure 2, a flow diagram showing the main steps of the first method of the invention is illustrated in line with the above detailed description. The steps of the method may be carried out a computer device to produce a unique location identifier for any location on the surface of the Earth at a predefined resolution. As a first step S100, a 2D geographical, position of a location is received by the computer device. The location position may be entered by the user or may be read from a GPS unit attached to or incorporated in the computer device.

Next, in step S110, a grid point nearest to the previously obtained position of said location is identified. As described above, the grid points are uniformly distributed along a plurality of predefined latitudes, wherein said predefined latitudes are equally spaced from each other in the longitudinal direction by a predefined distance, for example by 14 meters.

In step S120, a unique code represented by a plurality alphanumerical characters are assigned to said nearest grid point. The unique code may, for example, be represented in the numeral system of 36, which contains 36 different alphanumerical symbols. For achieving a position resolution of at least 10 meters, the use of 8-character long code words (based on the numeral system of 36) is enough for the entire surface of the Earth, whereas 5-character long code words are suitable, for representing the location codes within the areas of big cities. In this latter case, however, the areas may be identified, for example, by the 3-character IATA codes, resulting in location codes having a total length of 8 alphanumerical characters.

Finally, in step S130, the alphanumerical code is made available as a location identifier of said location. In this step, the code may be presented to the user by means of the graphical user interface of the computer device, e.g. its display, or may be communicated to another computer device via e-mail, SMS or the like.

In the reverse conversion method, an input alphanumerical string or code is first converted into an integer and then a search for the latitude containing the grid point specified by the input code is carried out. The latitude to be found shall be between the minimum offset value *base* and the maximum value of the latitudes, and the respective latitude value may be found by a binary search. The first latitude on the southern hemisphere is known. This latitude will be used for determining on which hemisphere the location to be positioned resides.

A binary search is started on the selected hemisphere using the following steps:

- A latitude is freely selected, and then it is checked if the grid point associated with the location code's numeric value falls on the northern or southern side of that latitude, or falls right on it, thereby the correct latitude is eventually identified.

- As the latitude value associated with the northern pole is known, a value being smaller than or equal to the northern pole's latitude value means a grid point on the northern hemisphere, otherwise the input grid point is on the southern hemisphere.

- Each latitude has a starting offset, thus the final result is the difference of the input and its latitude's offset. This corresponds to a longitudinal move along that latitude. It was explained above how the latitude offset may be found via a binary search. In the first method of the present invention (forward conversion), moving one grid point to the East along a latitude is represented by adding 1 to the result, and here the reverse operation is to be done, i.e. advancing by as many points as given by the code, from an initial grid point along a predefined path of the grid points of the grid. The location is within a predefined distance of the last grid point.

EXAMPLE

Using the conversion method according to the present invention, the lat/long coordinates of a geographic position may be easily converted into an 8-character alphanumeric code, wherein said code is associated with a location with a predefined distance error, which is preferably less than 10 meters. For example:

47°31'13.3"N 19°01'37.1"E = C9TT.4VKH

When the location code is generated on the basis of IATA area codes and the geographic position within a specific area, the location code may be represented in the following form:

47.32'28.3"N 18.56'44.5"E = BUD.A1YUG

On the other hand, using the reverse conversion method according to the present invention, an 8-character alphanumeric code of a location may be easily converted into the lat/long coordinates of a grid point near, which is presumably closest to the location of interest. For example:

C9TT.4VKH = 47°31'13.3212"N, 19°01'37.182"E

The methods according to the present invention have the following advantages. The computer implementation of the methods requires relatively small storage space as there is no need of storing a large data base for linguistic words. The methods can be implemented as offline applications allowing the conversion and the reverse conversion without internet connection. Due to the alphanumerical code representation of the geographic positions, the method provides a language-independent solution, which allows unlimited language portability. A further advantage of its language-independency is that it allows easy speech recognition as only the audio recognition of 36 different symbols should be solved.

**Claims**

1. A computer-implemented method of producing a location identifier, the method comprising the following steps carried out in a computer:

    - a) receiving (S 100) a 2D geographical position of a location (P);
    - b) identifying (S110) a grid point (G) nearest to said location, wherein the grid points are uniformly distributed along a plurality of predefined latitudes, said predefined latitudes being equally spaced from each other in the longitudinal direction by a predefined distance;
    - c) assigning (S120) a unique code represented by a plurality of alphanumerical characters to said grid point (G); and
    - d) making the alphanumerical unique code available (S130) as a location identifier of said location (P).

2. The method of claim 1, wherein step c) comprises

    - counting the grid points from a predefined initial grid point (I), along a predefined path, to the grid point (G) nearest to said location (P), thereby obtaining a count value, and
    - representing said count value in a numeral system of a predefined base.

3. The method according to claim 1 or 2, the 2D geographical coordinates are GPS coordinates.

4.  The method according to any one of claims 1 to 3, wherein the longitudinal distance between two adjacent latitudes is at most about 14 meters, the lateral distance between two adjacent grid points is at most about 14 meters, and the location identifier is a code represented in the numeral system of 36.

5.  The method according to any one of claims 1 to 4, wherein the entire surface of the Earth is covered by said grid points, and the location identifiers are represented by 8 alphanumerical characters.

6.  The method according to any one of claims 1 to 4, wherein a plurality of predefined rectangular or substantially rectangular areas are covered by said grid points, and the location identifiers are represented by 8 alphanumerical characters, the first 3 characters being a specific area code and the remaining 5 characters being alphanumerical characters generated on the basis of the position of the location within said area, said specific area code being selected from the group of IATA codes, postal index numbers, country/city phone codes or the like.

7.  A computer program product stored on a computer-readable medium and comprising instructions which, when executed on a computer, cause the computer to carry out the method according to any one of claims 1 to 6.

FIG. 1

S100
Receive 2D geographical position
of a location

S110
Identify a grid point nearest to the
location

S120
Assign a unique alphanumerical
code to the selected grid point

S130
Make the code available as a
location identifier

Figure 2

**EUROPEAN SEARCH REPORT**

Europäisches
Patentamt
European
Patent Office
Office européen
des brevets

Application Number

EP 16 46 2009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/057221 A1 (TOMTOM INT BV [NL]) 25 April 2013 (2013-04-25) * page 1 - page 5 * ----- | 1-7 | INV. G06F17/30 G01C21/32 G09B29/10 |
| A | Darrell S Massengill ET AL: "PROC GEOCODE: Finding Locations Outside the U PROC GEOCODE: Finding Locations Outside the U.S", , 1 January 2013 (2013-01-01), XP055355888, Retrieved from the Internet: URL:http://support.sas.com/rnd/papers/sasgf13/Geocode2013.pdf [retrieved on 2017-03-17] * the whole document * ----- | 1-7 | |
| A | Anonymous: "Reading US National Grid (USNG) Coordinates FGDC-STD-011-2001", fgdc.gov , 1 January 2001 (2001-01-01), XP002768291, Retrieved from the Internet: URL:https://www.fgdc.gov/usng/educational-resources/USNGInstruct_No1v4_No2_r.pdf [retrieved on 2017-03-17] * the whole document * ----- | 1-7 | TECHNICAL FIELDS SEARCHED (IPC) G06F G01C G09B |

The present search report has been drawn up for all claims

| Place of search | Date of completion of the search | Examiner |
|---|---|---|
| The Hague | 17 March 2017 | Warry, Lawrence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 46 2009

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2017

| Patent document cited in search report | Publication date | Patent family member(s) | Publication date |
|---|---|---|---|
| WO 2013057221 A1 | 25-04-2013 | EP 2769182 A1<br>RU 2014119925 A<br>US 2015012214 A1<br>US 2016363453 A1<br>WO 2013057221 A1 | 27-08-2014<br>27-11-2015<br>08-01-2015<br>15-12-2016<br>25-04-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090077100 A
- WO 2014170646 A1